(19) Europäisches Patentamt
European Patent Office
Office européen des brevets

(11) **EP 1 535 990 A1**

(12) **EUROPÄISCHE PATENTANMELDUNG**

(43) Veröffentlichungstag:
**01.06.2005 Patentblatt 2005/22**

(51) Int Cl.[7]: **C11D 1/52**, C11D 3/37, C09D 9/04

(21) Anmeldenummer: **03027079.7**

(22) Anmeldetag: **25.11.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Sika Tivoli GmbH**
**22525 Hamburg (DE)**

(72) Erfinder:
- **Wenck, Violetta**
  **22844 Noderstedt (DE)**
- **Paschkowski, Kai**
  **21635 Jork (DE)**

(74) Vertreter: **Isler, Jörg**
**c/o Sika Technology AG,**
**Geschäftsstelle Zürich,**
**Tüffenwies 16,**
**Postfach**
**8048 Zürich (CH)**

(54) **Reinigungsmittelzusammensetzung**

(57) Die vorliegende Erfindung umfasst eine Reinigungsmittelzusammensetzung für reaktive Polyurethanschmelzklebstoffe umfassend mindestens ein Trägermittel A ohne NCO-reaktiven Gruppen sowie mindestens eine Verbindung B mit einer NCO-reaktiven Gruppe trägt, und ein monofunktionelles Amid oder ein monofunktionelles Imid ist.

Weiterhin umfasst die Erfindung ein Verfahren zur Reinigung von Applikationsanlagen und -Geräten von reaktiven Polyurethanschmelzklebstoffen sowie die Verwendung einer Reinigungsmittelzusammensetzung zur Entfernung von reaktiven Polyurethan-Schmelzklebstoffen aus Applikationsanlagen oder Applikationsgeräten.



Printed by Jouve, 75001 PARIS (FR)

## Beschreibung

### Technisches Gebiet

Die vorliegende Erfindung betrifft Reinigungsmittel für die Reinigung von Verarbeitungsanlagen von reaktiven Polyurethan-Schmelzklebstoffen.

### Stand der Technik

Bei der Verarbeitung von reaktiven Polyurethan-Schmelzklebstoffen treten aufgrund der Reaktivität mit Wasser, insbesondere in Form von Luftfeuchtigkeit, mit der Zeit stets ausgehärtete Klebstoffpartikel auf, welche sich nachteilig auf die Qualität und Applikation auswirken. Deshalb ist eine regelmässige Reinigung der Anlagen und Geräte nötig. Eine manuelle Reinigung ist jedoch sehr aufwendig, arbeitsintensiv und sehr kostspielig, da sie meist ein Auseinanderbauen der Apparatur bedingt. Eine weitere Schwierigkeit in der Verarbeitung besteht vor allem bei Betriebsunterbrüchen, wie beispielsweise bei kurzfristigen Pannen oder bei längeren Stillständen über Nacht oder über das Wochenende. In diesen Fällen verbleibt der Polyurethan-Schmelzklebstoff unbewegt in der Anlage und es können sich Aushärtungen an Oberflächen, insbesondere an beweglichen Teilen oder Düsen der Maschinen absetzen. Dies ist besonders dort kritisch, wo der Klebstoff mit Umgebungsluft in Kontakt tritt.

Aus diesem Grund ist es ein Bedürfnis, eine Alternative zur aufwendigen manuellen Reinigung zur Verfügung zu stellen. Es wurden Reinigungspasten vorgeschlagen, die aber aufgrund der darin enthaltenen abrasiven Bestandteilen die Anlagen stark schädigen und deshalb nicht eine wirkliche Alternative darstellen. EP 0 544 058 offenbart eine Reinigungsmittelzusammensetzung, welche neben einer nicht Isocyanat-reaktiven Polyurethan-Masse einen monofunktionellen Alkohol beinhaltet.

Weiterhin offenbart US 5,772,790 eine Reinigungsmittelzusammensetzung, welchen neben einem nicht-härtbaren Polyurethanprepolymer ein monofunktionelles Amin beinhaltet. Amine sind jedoch arbeitshygienisch und umwelttoxikologisch problematisch, da Amine korrosiv wirken. Insbesondere die bevorzugten Fettamine sind problematisch, da sie im Falle eines unbeabsichtigten Kontaktes, beispielsweise bei einem Unfall, mit den Augen aufgrund ihres Tensidcharakters äusserst schwierig daraus zu entfernen sind, insbesondere bevor die ätzende Wirkung eintrifft. Weiterhin ist das Arbeiten mit niedermolekularen Aminen stets mit einer unangenehmen Geruchsentwicklung verbunden.

### Darstellung der Erfindung

Es war deshalb die Aufgabe der vorliegenden Erfindung, eine wirksame Reinigungsmittelzusammensetzung zur Verfügung zu stellen, welche die Nachteile des Standes der Technik überwindet und insbesondere keine korrosive Amine enthält und arbeitshygienisch vorteilhaft ist.

Überraschenderweise wurde gefunden, dass dies durch eine Reinigungsmittelzusammensetzung nach Anspruch 1 erfüllt werden kann.

Die verwendete Reinigungsmittelzusammensetzung ist frei von korrosiven Bestandteilen und bietet toxikologische Vorteile. Die eingesetzten Substanzen sind im Wesentlichen frei von störendem Geruch und gut verträglich. Durch Variation des Trägermaterials und der NCO-reaktiven Substanz lassen sich die Eigenschaften der Reinigungsmittelzusammensetzung einfach auf die zu reinigenden Schmelzklebstoffe anpassen.

### Wege zur Ausführung der Erfindung

Die vorliegende Erfindung betrifft eine Reinigungsmittelzusammensetzung für reaktive Polyurethanschmelzklebstoffe umfassend mindestens ein Trägermittel **A**, welches keine funktionellen Gruppen trägt, welche mit Isocyanat reaktiv sind, sowie mindestens eine Verbindung **B**, welche eine Isocyanat-reaktive funktionelle Gruppe trägt, und ein monofunktionelles Amid der Formel (I) oder der Formel (II) oder ein monofunktionelles Imid der Formel (III) ist.

Die Reinigungsmittelzusammensetzung umfasst mindestens ein Trägermittel **A**, welches keine funktionellen Gruppen trägt, welche mit Isocyanatgruppen reaktiv sind. Unter einem "Trägermittel" im Sinne dieser Schrift werden Polymere verstanden, welche thermoplastisch sind und die Verbindung **B** im wesentlichen homogen aufnehmen können.

Es ist wichtig, dass das Trägermittel **A** keine Isocyanat-reaktive Gruppen aufweist, um zu verhindern, dass das Trägermittel **A** bei Kontakt mit dem reaktiven Polyurethan-Schmelzklebstoff vernetzend wirkt.

Als Trägermittel **A** kommen verschiedenste Materialien in Frage, jedoch muss das Trägermittel **A** thermoplastisch sein und darf keine Isocyanat-reaktive Gruppen aufweisen. Weiterhin sollte vorteilhaft das Trägermittel **A** bei der Applikationstemperatur eine mit dem zu verdrängenden reaktiven Polyurethan-Schmelzklebstoff vergleichbare Viskosität aufweisen.

Als nicht reaktive Trägermittel **A** geeignet sind beispielsweise nicht reaktive Polyurethane; natürliche, chemisch modifizierte, synthetische Wachse oder Harze; oder blockierte Polyole oder Homo- oder Copolymere.

Als nicht reaktive Polyurethane kommen beispielsweise stöchiometrisch blockierte Polyurethanprepolymere in Frage, welche mit einem Blockierungsmittel inertisiert sind.

Einerseits sind Isocyanatgruppen aufweisende Polyurethanprepolymere mit Blockierungsmittel wie beispielsweise ε-Caprolactam oder monofunktionellen Alkoholen oder Aminen oder Mercaptanen blockierbar. Andererseits können OH-Gruppen aufweisende Polyurethanprepolymere durch monofunktionelle Isocyanate, insbesondere p-Tosylisocyanat blockiert werden.

In einer bevorzugten Ausführungsform wird ein nicht reaktives Polyurethan eingesetzt, welches aus dem zu verdrängenden reaktiven Polyurethan-Schmelzklebstoff besteht, dessen reaktive Isocyanatgruppen mit einem monofunktionellen Alkohol, Amin, Mercaptan, Amid oder Imid, insbesondere einem Amid der Formel (I) oder (II) blockiert worden sind.

Als blockierte Polyole kommen insbesondere im wesentlichen total veretherte Polyole in Frage. Das Polyolgerüst dieses veretherten Polyols ist insbesondere ausgewählt aus der Gruppe umfassend Polyetherpolyole, Polyesterpolyole, Polycaprolactonpolyole. Im besonderen handelt es sich hierbei um Dialkoxypolyalkoxydiole, bevorzugt Dimethoxypolyethylenglycole oder Dimethoxypolypropylenglycole, oder Alkoxy-Polyesterpolyole. Die veretherten Polyesterpolyole weisen insbesondere weder freie Hydroxygruppen noch frei Carboxylgruppen auf.

Andererseits sind als blockierte Polyole geeignet vor allem Polyesterpolyole, Polycarbonatpolyole, Polyhydroxyterminierte Polybutadienpolyole, Polyetherpolyole, insbesondere Polyoxyalkylenpolyole, welche mit einer monofunktionellen Isocyanatverbindung stöchiometrisch blockiert werden, so dass weder freie Hydroxygruppen noch frei Carboxylgruppen vorhanden sind.

Bei den erwähnten blockierten Trägermitteln ist darauf zu achten, dass das Blockierungsmittel bei der Applikationstemperatur der Reinigungsmittelzusammensetzung nicht zu wesentlichen Anteilen deblockiert.

Weiterhin geeignet als Trägermittel **A** sind Kolophonium, Kohlenwasserstoffharze, hydrierte oder nicht hydrierte Terpenharze sowie Petroleumharze.

Geeignete Homo- oder Copolymere sind thermoplastische Homo- oder Copolymere, insbesondere diejenigen welche aus der Polymerisation von Monomere, welche C=C-Doppelbindungen aufweisen hergestellt werden, insbesondere mindestens einem Monomer ausgewählt aus der Gruppe umfassend Ethylen, Propylen, Butadien, Vinylester, Vinylchlorid, Styrol sowie Ester der Acryl- oder Methacrylsäure. Bevorzugt sind Copolymere aus Ethylen und Vinylester, insbesondere Ethylen/Vinylacetat-Copolymere (EVA).

Als besonders geeignet haben sich Ethylen/Vinylacetat-Copolymere als Trägermittel gezeigt. Im Vergleich zu den blockierten Polyurethanprepolymeren zeichnen sich die Ethylen/Vinylacetat-Copolymere vor allem durch einen tiefen Preis und breite kommerzielle Erhältlichkeit aus. Entgegen der Fachmeinung, wie sie beispielsweise in EP 0 544 058 geäussert wird, wurde gefunden, dass EVA sehr gut mit Polyurethanklebstoffen mischbar ist und deshalb für die Anwendung als Trägermaterial einer Reinigungsmittelzusammensetzung geeignet ist.

Das Trägermittel **A** weist vorteilhaft eine Glasübergangstemperatur (Tg) auf, die tiefer als die Anwendungstemperatur der Reinigungsmittelzusammensetzung ist.

Das Trägermittel **A** wird insbesondere derart ausgewählt, dass die Polarität des Trägermittels **A** auf diejenige des zu verdrängenden Schmelzklebstoffes abgestimmt ist. Weil Polyurethanschmelzklebstoffe vorzugsweise polaren Charakter aufweisen sollten, bedeutet dies, dass vor allem polare Trägermittel **A** bevorzugt werden.

Das Trägermittel **A** ist ein mengenmässig wesentlicher Anteil der Reinigungsmittelzusammensetzung. Üblicherweise beträgt der Anteil mehr als 50 Gewichts-%, insbesondere zwischen 60 und 90 Gewichts-%, bezogen auf die Reinigungsmittelzusammensetzung.

Die Reinigungsmittelzusammensetzung umfasst des weiteren mindestens eine Verbindung **B**, welche eine Isocyanat-reaktive funktionelle Gruppe trägt. Diese Verbindung **B** ist entweder ein monofunktionelles Amid der Formel (I) oder der Formel (II) oder ein monofunktionelles Imid der Formel (III).

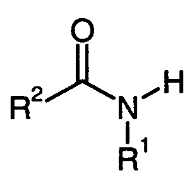

(I)

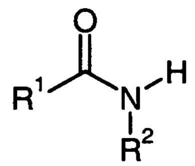

(II)

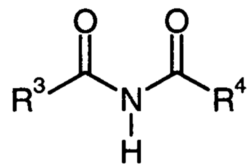

(III)

$R^1$ steht für ein H, einen $C_1$-$C_4$-Alkylrest oder einen Benzylrest. $R^2$ steht für einen $C_8$-$C_{22}$ Alkylrest, welcher gesättigt oder ungesättigt ist. $R^3$ steht für einen $C_8$-$C_{22}$ Alkylrest, welcher gesättigt oder ungesättigt ist. $R^4$ steht für einen $C_1$-$C_7$- oder einen $C_8$-$C_{22}$ Alkylrest, welcher gesättigt oder ungesättigt ist. Insbesondere ist $R^4$ ein gesättigter $C_1$-$C_7$-Alkylrest, insbesondere Methyl, Ethyl oder Propyl. Unter ungesättigt werden hierbei ‚Kohlenstoff-Kohlenstoff-Doppel- oder Dreifachbindungen enthaltend' verstanden. Die Reste können auch mehrfach ungesättigt sein, d.h. es können auch mehrere solche Doppel- und/oder Dreifachbindungen im demselben Rest vorhanden sein. Falls dies der Fall ist, können diese Mehrfachbindungen konjugiert zueinander oder isoliert voneinander vorhanden sein.

Die Reste $R^1$, $R^2$, $R^3$ oder $R^4$ können unabhängig voneinander verzweigt oder unverzweigt sein. Bevorzugt sind die Reste jedoch unverzweigt. Insbesondere bei Verzweigungen in unmittelbarer Nähe der Amidgruppe sind nachteilig. Somit ist bevorzugt, dass der Kohlenstoff, welcher direkt verbunden mit dem Stickstoff- respektive dem Kohlenstoffatom der Amidgruppe ist ein Wasserstoffatom-tragender Kohlenstoff ist, insbesondere ein Methylenkohlenstoff ist. Eine Verzweigung in unmittelbarer Nähe zur Amidgruppe ist deshalb nachteilig, da dies bei der Reaktion mit der Isocyanatgruppe zu einer sterischen Hinderung führt und dadurch die Reaktivität der Verbindung **B** reduziert wird. Dies ist besonders ausgeprägt bei Verbindungen **B** der Formel (III).

Bei den Verbindungen (I) und (III) weisen die Reste $R^2$, $R^3$ oder $R^4$ bevorzugt eine ungerade Anzahl Kohlenstoffatome auf, während bei Verbindungen der Formel (II) $R^2$ bevorzugt eine gerade Anzahl Kohlenstoffatome aufweist.

Bevorzugt ist $R^1$ ein Wasserstoffatom.

Die Verbindung **B** weist bevorzugt einen Schmelz- oder Erweichungspunkt zwischen 40 und 120°C, insbesondere zwischen 50 und 100°C, auf.

In einer Ausführungsform ist die Verbindung **B** ein Amid der Formel (I).

Bevorzugte Verbindungen **B** der Formel (I) weisen ein H als Substituenten $R^1$ auf. Diese Verbindungsklasse der primären Amide sind dem Fachmann unter dem Begriff ‚Fettsäureamide' bekannt. Allerdings sind nicht alle Fettsäureamide gleich geeignet. Insbesondere Fettsäuren mit einem Alkylrest von mehr als 22 Kohlenstoffatome sind nicht geeignet.

Solche Fettamide $R^2CONH_2$ lassen sich beispielsweise durch die Reaktion von den entsprechenden Fettsäure $R^2COOH$ mit Ammoniak umsetzen.

Die Verbindungen **B** der Formel (I), in denen $R^1$ einen $C_1$-$C_4$-Alkylrest oder einen Benzylrest darstellen, lassen sich beispielsweise durch N-Alkylierungen des entsprechenden Fettamids $R^2CONH_2$ mittels Alkylhalogenen hergestellen, oder lassen sich aus der Umsetzung eines $C_1$-$C_4$-Alkylamins oder Benzylamins mit der entsprechenden Fettsäure $R^2COOH$ erhalten.

Besonders bevorzugte Verbindungen **B** der Formel (I) sind ausgewählt aus der Gruppe umfassend Lauryl-, Myristin-, Palmitin-, Stearin-, Arachin-, Tubercolostaearin- Palmitolein-, Öl-, Linol-, Linolen-, Elaseostearin-, Eruca-Arachidonsäureamid.

In einer weiteren Ausführungsform ist die Verbindung **B** ein Amid der Formel (II). Solche Amide lassen sich aus der Umsetzung von Fettsäureaminen $R^2NH_2$ mit der jeweiligen Carbonsäure $R^1COOH$ respektive der jeweiligen Säurechloride $R^1COCl$ herstellen. Die hierfür eingesetzten Fettamine ihrerseits werden üblicherweise durch Reduktion aus den entsprechenden Fettamiden oder direkt aus den entsprechenden Fettsäuren hergestellt.

In einer weiteren Ausführungsform ist die Verbindung **B** ein Imid der Formel (III). Solche Amide lassen sich beispielsweise aus der Umsetzung eines Fettamids $R^3CONH_2$ mit einem Säurechlorid $R^4COCl$ oder mit einem Säureanhydrid $(R^4CO)_2O$ erhalten.

Bei den Verbindungen **B** handelt es sich bevorzugt um technische Gemische von Amiden, respektive Imiden, mit unterschiedlich langen Resten $R^2$, $R^3$ oder $R^4$, insbesondere um technische Gemische von Fettsäureamiden.

Bevorzugt sind Verbindungen **B** der Formel (I), insbesondere Stearinsäureamid oder Erucamid. Die bevorzugteste Verbindung **B** ist Erucamid.

Es ist für das Wesen der Erfindung wichtig, dass die Verbindung **B** lediglich eine Amid- oder eine Imidgruppe aufweist und keine weiteren Isocyanat-reaktive Gruppen aufweist.

Denn es ist wichtig, dass die Verbindung **B** jeweils lediglich mit einer Isocyanatgruppe eines Polymeren R-$(NCO)_n$ des Reaktivschmelzklebstoffes reagiert und Vernetzungen verhindert werden. R bedeutet hierbei ein polymeres Kettengerüst eines reaktiven Polyurethan-Schmelzklebstoffpolymeren, welcher n Isocyanat-Gruppen trägt.

Durch die Reaktion von Amide der Formel (I) oder (II) mit Isocyanat entstehen Acylharnstoffe der Formel (IV) oder (V), beziehungsweise entstehen aus der Reaktion von Imiden der Formel (III) mit Isocyanaten N,N-Diacylharnstoffe der Formel (VI).

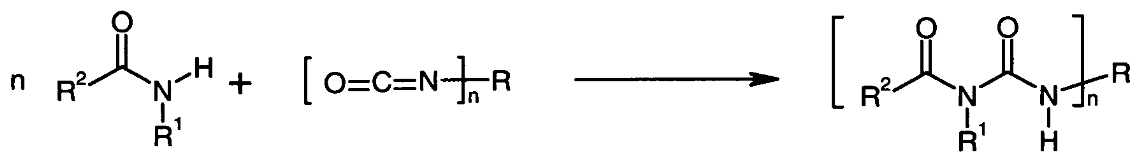

(I) (IV)

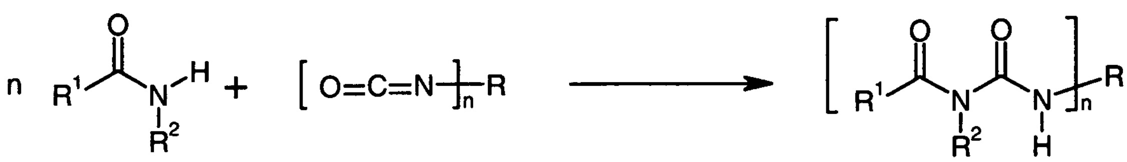

(II) (V)

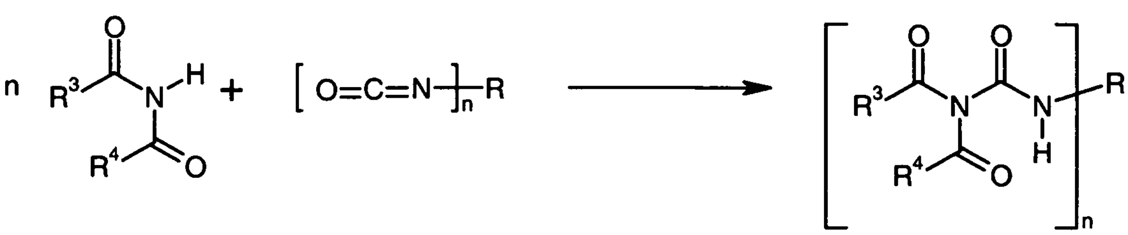

(III) (VI)

Durch die Wahl der Reste $R^1$, $R^2$, $R^3$ und $R^4$ sowie des verwendeten Typs der Verbindungen **B** ((I),(II) oder (III) oder Mischungen davon) kann die Reaktivität der Reinigungsmittelzusammensetzung in einem sehr breiten Umfang gesteuert und auf die Bedürfnisse bei der jeweiligen Reinigung abgestimmt werden.

Der Gehalt an reaktiven Verbindung **B** in der Reinigungsmittelzusammensetzung ist so zu wählen, dass die Deaktivierung der Isocyanatgruppen des reaktiven Polyurethan-Schmelzklebstoffs möglichst effizient erfolgt. Dies hängt sehr stark vom Gehalts an freien Isocyanatgruppen des Schmelzklebstoffs ab. Es hat sich gezeigt, dass ein Gehalt von 10 bis 150 mmol, insbesondere 40 bis 100 mmol, der Verbindung **B** pro 100 g Reinigungsmittelzusammensetzung üblicherweise eine gute Anwendung darstellt.

Die Reinigungsmittelzusammensetzung umfasst vorteilhaft weiterhin einen Farbstoff oder ein Pigment. Dieser Farbstoff oder dieses Pigment ist insbesondere so zu wählen, dass er oder es möglichst homogen in die Reinigungsmittelzusammensetzung einarbeitbar ist und auch bei längerer Lagerung in der Reinigungsmittelzusammensetzung homogen verteilt verbleibt und insbesondere keine Absetzungen oder kein Ausschwimmen zeigt.

Weiterhin soll ein solcher Farbstoff oder ein solches Pigment visuell gut erkennbar sein, wenn es mit dem Schmelzklebstoff vermischt wird. Dies wird insbesondere dadurch erreicht, dass der Farbstoff einen hohen molaren

Extinktionskoeffizienten bei einer Wellenlänge aufweist, bei welcher der Schmelzklebstoff nicht oder nur geringfügig absorbiert.

Es ist auch denkbar, dass eine ein solcher Farbstoff oder Pigment durch die Reaktion mit Isocyanatgruppen farblos wird oder seine Farbe ändert.

Bevorzugt werden Farbstoffe eingesetzt, die gelöst im Trägermittel **A** vorliegen.

Der Vorteil beim Einsatz eines solchen Farbstoffes oder Pigmentes besteht darin, dass visuell ersichtlich ist, ob eine Reinigung erfolgt ist, und sich kein reaktiver Polyurethan-Schmelzklebstoff mehr in der Anlage befindet, beziehungsweise, ob nach Wiederinbetriebnahme die Reinigungsmittelzusammensetzung vollständig entfernt worden ist. Dies ist insbesondere deshalb so wichtig, weil einerseits eine unvollständige Verdrängung des Schmelzklebstoffes zu Aushärtungen führen kann. Andererseits können Aushärtungsprobleme und damit verbunden teure Schadensfälle auftreten, wenn die Reinigungsmittelzusammensetzung unbemerkt vermischt mit dem reaktiven Polyurethan-Schmelzklebstoff wird und ein so mit Reinigungsmittelzusammensetzung verunreinigter -und damit blockierter- ‚reaktiver' Polyurethan-Schmelzklebstoff in eine für den reaktiven Polyurethan-Schmelzklebstoff gedachte Anwendung gelangt.

Es ist deshalb äusserst wichtig zu gewährleisten, dass nach der Reinigung keine solchen Vermischungen erfolgen, beziehungsweise, dass möglichst schnell möglichst alle Reinigungsmittelzusammensetzung wieder aus der oder dem zu reinigenden Anlage oder Gerät entfernt werden kann.

Aus diesem Grund ist es auch vorteilhaft, dass beim Ausstossen der Reinigungsmittelzusammensetzung die Menge des mit Reinigungsmittelzusammensetzung beladenen Schmelzklebstoffes möglichst gering ist, so dass möglichst wenig Abfall entsteht.

Wenn kein Farbstoff oder kein Pigment verwendet ist, muss der Zeitpunkt des vollständigen Entfernung der Reinigungsmittelzusammensetzung mittels anderen Methoden bestimmt werde, wie beispielsweise Messen des NCO-Gehaltes. Solche Messungen können jedoch sehr aufwendig und zeitintensiv sein.

Die Reinigungsmittelzusammensetzung kann bei Bedarf weiterhin Füllstoffe enthalten. Um eine Schädigung der Anlagen und Geräte zu vermeiden, sollten in der Regel diese Füllstoff jedoch nicht abrasiv sein. Es sind Reinigungsmittelzusammensetzungen bevorzugt, die keine Füllstoffe enthalten.

Die Reinigungsmittelzusammensetzung kann bei Bedarf weitere Bestandteile enthalten, wie Weichmacher, Stabilisatoren, insbesondere Hitzestabilisatoren, oberflächenaktive Hilfsmittel, wie beispielsweise Tenside, wie sie in konventionellen Reinigungsmittel vorkommen.

Bei der Verwendung von Weichmachern sind jedoch Grenzen gesetzt. Es ist bei hohen Gehalten oder gewissen Typen der Nachteil vorhanden, dass durch Migrationseffekte eine Weichmacher enthaltende Reinigungsmittelzusammensetzung bei Lagerung schmierig wird und deshalb schwierig hand zu haben wird.

Die optionalen Bestandteile der Reinigungsmittelzusammensetzung sollen derart ausgewählt werden, dass sie keine funktionelle Gruppen aufweisen, die mit Isocyanaten, insbesondere bei der Reinigungstemperatur, nicht reagieren.

Die Reinigungsmittelzusammensetzung weist vorteilhaft eine Viskosität bei der Reinigungstemperatur auf, die vergleichbar mit dem zu verdrängenden Schmelzklebstoff bei dieser Temperatur ist.

Weist die Reinigungsmittelzusammensetzung eine Viskosität auf, die stark tiefer ist, als die des zu verdrängenden Schmelzklebstoffs, ist die Reinigungswirkung beeinträchtigt, da die Reinigungsmittelzusammensetzung lediglich am Schmelzklebstoff vorbei fliesst, gemäss dem Weg des kleinsten Widerstandes, ohne ihn wirklich effektiv auszustossen. Aus diesem Grund sind Lösungsmittel als Reinigungsmittel für diese Zweck sehr schlecht geeignet.

Weist die Reinigungsmittelzusammensetzung eine Viskosität auf, die wesentlich höher ist, als die des zu verdrängenden Schmelzklebstoffs, ist zwar die Verdrängungswirkung der Reinigungsmittelzusammensetzung sehr gut, es tritt aber der grosse Nachteil auf, dass nach erfolgter Reinigung der Anlage oder des Gerätes die Reinigungsmittelzusammensetzung nur schwer durch einen nachfolgenden Schmelzklebstoff verdrängt werden kann.

Es ist deshalb vorteilhaft, dass die Viskositäten der Reinigungsmittelzusammensetzung und des zu verdrängenden reaktiven Polyurethan-Schmelzklebstoff bei der Reinigungstemperatur vergleichbar sind. Dadurch wird des weiteren eine gute und schnelle Vermischung zwischen der dem Polyurethan-Schmelzklebstoff und der Reinigungsmittelzusammensetzung, beziehungsweise mit der Isocyanat-reaktiven Verbindung **B** erreicht, so dass eine möglichst schnell eine komplette Deaktivierung des reaktiven Polyurethan-Schmelzklebstoffs erfolgt.

In Praxis beträgt die Viskosität der Reinigungsmittelzusammensetzung 1'000 bis 100'000 mPas, insbesondere 2'000 bis 20'000 mPas bei der Applikationstemperatur.

Weiterhin ist es für die Reinigung von Vorteil, wenn die Reinigungsmittelzusammensetzung verträglich mit dem zu verdrängenden reaktiven Polyurethan-Schmelzklebstoff ist.

Bevorzugt ist diese Verträglichkeit auch bei hohen Temperaturen, insbesondere bei der Reinigungstemperatur, gegeben.

In weiteren Ausführungsformen umfasst die Reinigungsmittelzusammensetzung Mischungen von Trägermittel **A** mit unterschiedlichen Schmelzpunkten oder es werden Mischungen von Reinigungsmittelzusammensetzungen, deren Trägermittel **A** unterschiedliche Schmelzpunkte aufweisen, verwendet.

Dies erlaubt einen modularen Einsatz durch Mischen von Trägermittel **A** oder Reinigungsmittelzusammensetzung, deren Zusammensetzung vor Ort einfach an die Bedürfnisse angepasst werden, wenn zum Beispiel auf derselben Anlage oder demselben Gerät unterschiedliche reaktive Polyurethan-Schmelzklebstoffe verwendet werden.

Die Reinigungsmittelzusammensetzung muss zumindest für die Zeit der Reinigung bei Temperaturen stabil sein, denen sie während der Reinigung ausgesetzt ist. Es ist anstrebenswert, die Reinigungsmittelzusammensetzung mindestens einige Stunden, insbesondere Tage, bei der Reinigungstemperaturen verweilen kann, ohne dass die Reinigungsmittelzusammensetzung zu wesentlichen Anteilen zersetzt oder abgebaut wird.

Die Reinigungsmittelzusammensetzung ist vorteilhaft möglichst frei von Wasser oder Feuchtigkeit. Es sollte deshalb bei der Herstellung möglichst trockene oder getrocknete Rohstoffe verwendet werden und auf aus der Umgebung wasseraufnehmende Inhaltsstoffe verzichtet werden.

In einer bevorzugten Ausführungsform umfasst die Reinigungsmittelzusammensetzung ein Ethylen/Vinylacetat-Copolymer als Trägermittel **A** und ein Fettsäureamid der Formel (I) als Verbindung **B**. In besonders bevorzugten Ausführungsform ist die Reinigungsmittelzusammensetzung umfassend oder bestehend aus einem Ethylen/Vinylacetat-Copolymer als Trägermittel **A** und einem Fettsäureamid der Formel (I) als Verbindung **B** und einem Farbstoff.

Eine solche Reinigungsmittelzusammensetzung ist äusserst effizient, kostengünstig und ökologisch und arbeitshygienisch äusserst vorteilhaft.

Die Reinigungsmittelzusammensetzung wird üblicherweise wie folgt hergestellt. Das Trägermittel **A** wird langsam unter Rühren auf eine Temperatur, die über dem Schmelzpunkt des Trägermittels liegt, erhitzt. Anschliessend wird unter Rühren oder Eindispergieren die Verbindung **B** hinzugegeben. Je nach Vorliegen der Darreichungsform dieser Verbindung **B** kommt sie hierfür als Granulat, Pulver oder als Schmelze zum Einsatz. Anschliessend können noch die weitere Komponenten hinzugegeben werden. Falls Stabilisatoren verwendet werden, ist es vorteilhaft, diese möglichst früh im Herstellungsprozess beizufügen.

Falls ein blockiertes Polyurethanprepolymer als Trägermittel **A** verwendet wird, wird dessen Herstellung vorteilhaft am Anfang der Reinigungsmittelzusammensetzung in situ durchgeführt.

Am Ende der Herstellung wird die Reinigungsmittelzusammensetzung in die richtige Darreichungsform gebracht, wie sie für die Anwendung benötigt wird. Sie kann beispielsweise als Granulat, in Schuppenform oder als Block vorliegen. Diese Überführung in die Darreichungsform erfolgt in bekannter Weise und kann unmittelbar aus der Schmelze oder während oder nach dem Abkühlung erfolgen. Vorteilhaft wird die Reinigungsmittelzusammensetzung direkt nach Herstellung aus der Schmelze in die Anwendungsform überführt. Bei der Auswahl dieser Darreichungsform ist es vorteilhaft eine solche Form zu wählen, die eine Dosierung der Reinigungsmittelzusammensetzung auch noch nach längerer Lagerzeit ermöglicht. Ebenso ist darauf zu achten, dass die für die Reinigungsmittelzusammensetzung verwendete Verpackung einen adequaten Schutz bietet und insbesondere feuchtigkeitsundurchlässig sein sollte.

Die Zugabe in die zu reinigende Anlage oder das zu reinigende Gerät sollte in fester Form oder in Form einer Schmelze erfolgen. Es ist bevorzugt, wenn die Reinigungsmittelzusammensetzung in Granulat oder Schuppenform vorliegt. Die Reinigungstemperatur ist die üblicherweise die Verarbeitungstemperatur des reaktiven Polyurethan-Schmelzklebstoffes, typischerweise 70 bis 180°C, insbesondere 90 bis 150°C. Es kann jedoch vorteilhaft sein, die Reinigung bei höherer Temperatur durchzuführen, damit der zu verdrängende reaktive Polyurethan-Schmelzklebstoff nieder viskoser wird. Durch die Zersetzungstemperatur des Polyurethan-Schmelzklebstoffes oder der Reinigungsmittelzusammensetzung sind hier jedoch systembedingte Obergrenzen vorhanden, die unter keinen Umständen überschritten werden dürfen.

Eine Reinigung einer Anlage oder eines Gerätes erfolgt typischerweise wie folgt beschrieben. Die Zuführung von reaktiven Polyurethan-Schmelzklebstoffes wird unterbrochen und die Reinigungsmittelzusammensetzung in die Anlage oder das Gerät zugegeben. Nachdem die Reinigungsmittelzusammensetzung als Schmelze vorliegt wird mit der Förderung der Polyurethan-Schmelzklebstoffes weitergefahren, und die ausgestossene Menge Polyurethan-Schmelzklebstoff gesammelt, bis gewährleistet ist, dass in der Anlage oder dem Gerät kein reaktiver Polyurethan-Schmelzklebstoff mehr vorhanden ist. Die Geschwindigkeit mit der Polyurethan-Schmelzklebstoff ausgestossen wird, und damit die Zeit, mit der die Reinigungsmittelzusammensetzung mit dem reaktiven Polyurethan-Schmelzklebstoff in Berührung kommt und reagieren kann, hängt von vielen Faktoren ab, insbesondere von der Reinigungstemperatur, der Reaktivität der Verbindung **B**, dem Gehalt an freien Isocyanatgruppen des reaktiven Polyurethan-Schmelzklebstoffes, die Dimensionen und Geometrie der zu reinigenden Anlage oder Gerätes sowie der Konzentration der Verbindung **B** in der Reinigungsmittelzusammensetzung.

Beim Wiederbeschicken der Anlage oder des Gerätes mit reaktiven Polyurethan-Schmelzklebstoff wird solange das ausgestossene Material gesammelt, bis gewährleistet ist, dass die gesamte Reinigungsmittelzusammensetzung aus der Anlage oder dem Gerät entfernt wurde.

Die Gesamtheit des gesammelten Polyurethan-Schmelzklebstoffes ist zu entsorgen oder einer anderweitigen hierfür geeigneten Verwendung zugeführt werden.

Die Reinigungsmittelzusammensetzung eignet sich speziell für das Reinigen von Verarbeitungsanlagen sowie von Applikationsgeräten, insbesondere von Auftragsapparaturen, von reaktiven Polyurethan-Schmelzklebstoffen. Typischerweise weisen diese Anlagen und Geräte sich verengende Teile wie Schlitze oder Düsen, bewegliche Teile wie Schnecken, Walzen, Rührer, Flügel, Pumpen oder auch Schläuche und Rohre auf, welche manuell nur mit sehr grossem Arbeits- und Kostenaufwand zu reinigen sind. Mit der erfindungsgemässen Reinigungsmittelzusammensetzung kann eine gründliche und trotzdem schonende und schnelle Reinigung dieser Anlagen und Geräte erfolgen, indem der reaktive Klebstoff hieraus entfernt wird.

Es ist wichtig, dass die Mischung des reaktive Polyurethanschmelzklebstoffs mit der Reinigungsmittelzusammensetzung keine markanten Erhöhung der Viskosität aufweist, sowohl beim Mischen als auch nach der Reaktion, weil dies sowohl für das Reinigen als auch das Wideranfahren der Anlage von grosser Wichtigkeit ist.

Es versteht sich von selbst, dass solche Reinigungsmittelzusammensetzungen auch für das Reinigen von Anlagen verwendet werden können, in welchen reaktive Polyurethan-Schmelzklebstoffe hergestellt werden.

**Beispiele**

Die Beispiele dienen zur Illustration der Erfindung und sind keineswegs als die Erfindung beschränkend aufzufassen.

**Herstellung Reinigungsmittelzusammensetzungen:**

Tabelle 1

| Eingesetze Rohstoffe. | | |
|---|---|---|
| **A** | *EVA1* | Schmelzindex (190°C, ASTM D 1238, modifiziert):500 dg/min Erweichungspunkt, Ring und Kugel (ASTM E 28): 88°C Vinylacetat-Anteil: 18% |
| **A** | *EVA2* | Viskosität (190°C, ASTM D3236) :3100 mPas<br>Schmelzpunkt (ASTM D 3418): 65°C<br>Erweichungspunkt, Ring und Kugel (ASTM E 28): 76°C<br>Vinylacetat-Anteil: 27.5% |
| ***B*** | *B1* | Erucamid |
| ***B*** | *B2* | Stearinsäureamid |
| | *Pigment* | Moltopren Blaupaste BU01, (Bayer AG, Deutschland) |

In einem geschlossenen Gefäss werden das Trägermittel **A**, Verbindung **B** sowie das Pigment aus Tabelle 1 in den Mengen gemäss Tabelle 2 gemeinsam vorgelegt und bei 140°C geschmolzen. Nachdem die Rohstoffe geschmolzen sind, werden diese 30 Minuten unter Vakuum gerührt. Nach dem Mischen liegt eine homogene, blaue Schmelze vor, die beim Erkalten auf Raumtemperatur erstarrt.

Tabelle 2.

| Reinigungsmittelzusammensetzungen | | | | | |
|---|---|---|---|---|---|
| | ***R1*** | ***R2*** | ***R3*** | ***R4*** | ***R5*** |
| *EVA1* | 75 g | 75 g | | | 60 g |
| *EVA2* | | | 75 g | 75 g | |
| *B1* | 25 g | | 25 g | | |
| *B2* | | 25 g | | 25 g | 40 g |
| *Pigment* | 0.04 g | 0.04 g | 0.04 g | 0.04 g | 0.04 g |

**Eigenschaften Reinigungsmittelzusammensetzungen**

Die Reinigungsmittelzusammensetzungen sind als Reinigungsmittel gut geeignet, wie Tabelle 3 und Tabelle 4 veranschaulichen.

**Bestimmungsmethoden**

Die Viskosität der Reinigungsmittelzusammensetzung wurde bei 130°C wurde nach Brookfield Thermosel (in Anlehnung an DIN EN ISO 3219) bestimmt.

Der Erweichungspunkt wurde mittels DIN 52011 (Ring & Kugel) bestimmt.

Zur Lagerung wurde die Reinigungsmittelzusammensetzung in einem geschlossenen Gefäss während 16 beziehungsweise 24 Stunden bei 140° C gelagert und dann visuell begutachtet, ob Farbänderungen oder Separierungen vorhanden sind.

Die Verträglichkeit der Reinigungsmittelzusammensetzung mit einem reaktiven Polyurethanschmelzklebstoff wurde mittels SikaMelt® 9600 (kommerziell erhältlich bei Sika Schweiz AG) in einer Mischung von 12g Reinigungsmittelzusammensetzung auf 9 g Schmelzklebstoff ermittelt. Hierzu wurde der Schmelzklebstoff und die Reinigungsmittelzusammensetzung während 1 Stunde bei 140°C in einem geschlossenen Gefäss gerührt und anschliessend visuell auf eventuelle Separierungen oder Farbänderungen beurteilt.

Gleichzeitig wurde die Reaktion mit den NCO-Gruppen wie folgt mittels IR nachgeprüft.

Die Umsetzung der Reinigungsmittelzusammensetzung mit einem reaktiven Polyurethanschmelzklebstoff wurde mittels SikaMelt® 9600 (kommerziell erhältlich bei Sika Schweiz AG) ermittelt. Hierzu wurde die Reinigungsmittelzusammensetzung dem aufgeschmolzenen Klebstoff im Verhältnis 12g Reinigungsmittelzusammensetzung: 9g Klebstoff (w/w) zugesetzt und in einem geschlossenen Gefäss während 1 Stunde unter Vakuum bei 130°C gerührt. Es wurde die Viskosität, sowie der Ablauf der Reaktion beurteilt. Der Ablauf der Reaktion wurde mittels Bestimmen der Intensität NCO-Bande (2270 $cm^{-1}$) im Infrarot-Spektrum durch Verdünnen der Reaktionsmischung (0.1g) mit THF (10 ml) bestimmt (Nicolet 320 FTIR, 700-4000 $cm^{-1}$, ATR).

Die Reaktionsmischung wurde jeweils in Aluminiumtuben zu je 30-40 g abgefüllt und in einem Warmluftofen bei der entsprechenden Temperatur gelagert.

Tabelle 3.

| Eigenschaften der Reinigungsmittelzusammensetzungen | | | | | |
|---|---|---|---|---|---|
| | ***R1*** | ***R2*** | ***R3*** | ***R4*** | ***R5*** |
| Viskosität 130°C;5 $min^{-1}$ [mPas] | 16'000 | 16'000 | 3'400 | 3'400 | 5'300 |
| 24 h Lagerung bei 140°C | comp.① | comp.① | comp.① | comp.① | comp.① |
| Viskosität nach der Umsetzung mit SikaMelt® 9600 (1h 130°C, 5 $min^{-1}$) [mPas]] | 40'000 | 32'000 | 15'000 | 13'000 | 15'000 |
| Reaktion mit SikaMelt® 9600 | voll.② | voll.② | voll.② | voll.② | voll.② |
| ① comp.=verträglich ② voll.=vollständig | | | | | |

Die Werte aus der Tabelle 3 und 4 zeigen, dass die Reinigungsmittelzusammensetzungen stabil sind und keine negativen Auswirkungen auf den Schmelzklebstoff haben. Insbesondere ist kein Anstieg der Viskosität nach der Lagerung mit dem Schmelzklebstoff festzustellen.

Tabelle 4.

| Eigenschaften der Reinigungsmittelzusammensetzung ***R3*** | |
|---|---|
| Erweichungspunkt [°C] | 83 |
| Viskosität 130°C, 5 $min^{-1}$ [mPas] | 3400 |
| 16 h Lagerung bei 140°C | Homogen keine Farbänderung |
| Verträglichkeit mit SikaMelt® 9600 (140°C/1h) | Verträglich keine Farbänderung |
| Viskosität SikaMelt® 9600 (130°C, 5 $min^{-1}$) [mPas] | 10'000 |
| Viskosität SikaMelt® 9600 (5h 130°C, 5 $min^{-1}$) [mPas] | 13'000 |
| Viskosität nach der Umsetzung mit SikaMelt® 9600 (0.5 h 130°C, 5 $min^{-1}$) [mPas] | 15'000 15'000 |
| Viskosität nach der Umsetzung mit SikaMelt® 9600 (5h 130°C, 5 $min^{-1}$) [mPas] | 15'000 15'000 |
| Reaktion mit SikaMelt® 9600 | Vollständig |

**Reinigung einer Tankschmelzanlage**

Es wurde eine Tankschmelzanlage vom Typ SKA-04 PU (Steinmeyer Klebtechnik, D-Bad Camberg) mit einem modifizierten Tank (150 mm Durchmesser anstelle von 130 mm Durchmesser) mit einem Inhalt von 4 Litern eingesetzt. Sie wurde über einen 2.5 m langen Schlauch eines Durchmesser von 8-10 mm mit einer Austrittsdüse verbunden. Weiterhin weist diese Tankschmelzanlage eine Zahnradpumpe zur Förderung auf.

Die Tankschmelzanlage wurde mit dem reaktiven Polyurethanschmelzklebstoff SikaMelt® 9630 (kommerziell erhältlich bei Sika Schweiz AG) befüllt. Der Klebstoff wurde zuerst bis zum minimalen Füllstand aus der Anlage herausgefördert. Anschliessend wurde ***R3***, als Beispiel für eine Reinigungsmittelzusammensetzung, bei 130°C zugegeben. Anschliessend erfolgte die Reinigung mittels Fördern des Reinigers durch die Anlage. Der Reaktivschmelzklebstoff wurde dabei entfernt und gleichzeitig neutralisiert. Die Reinigung wurde einerseits visuell und andererseits durch die Verfolgung mittels ATR-IR verfolgt.

Figur 1 zeigt den Verlauf der Reinigung. Hierbei wurde einerseits mittels ATR-IR bei der Wellenzahl 2270 $cm^{-1}$ das Verhältnis der Transmission des reinen Schmelzklebstoffs SikaMelt® 9630 *To* zur Transmission der Probe *Tm* gegenüber der aus der Anlage ausgestossenen Spülmasse m in Kilogramm aufgezeichnet und dessen Farbe visuell begutachtet. Am Anfang (Gebiet I) ist die Farbe des ausgestossenen Klebstoffes leicht hellgelb, entsprechend der natürlichen Farbe des Polyurethanschmelzklebstoffes. Bei etwa 0.8 kg werden erste Spuren von blauer Farbe sichtbar. Ab etwa 1.4 kg ist die Farbe konstant tiefblau (Gebiet III). Dazwischen ist eine ständig stärkere Blaufärbung zu beobachten (Gebiet II). Dabei wurden Verunreinigungen sehr effizient aus der Tankanlage entfernt.

Figur 1 zeigt einerseits ganz klar, dass die Reinigungsmittelzusammensetzung sehr gut als Reinigungsmittel für reaktive Polyurethanschmelzklebstoffe geeignet ist und die Reinigung sehr effizient erfolgt. Andererseits korreliert die festgestellte Farbe mit dem Isocyanatgehalt.

In analoger Weise konnte gezeigt werden, dass nach dem Hinzufügen von neuem SikaMelt® 9630 in die Tankschmelzanlage und anschliessenden Auspressen die Reinigungsmittelzusammensetzung ***R3*** mit vergleichbarer Effizienz wieder verdrängt werden konnte, indem weder visuell (keine Blaufärbung) noch durch IR feststellbare Reste von Reinigungsmittelzusammensetzung festgestellt werden konnte.

**Thermostabilitätsvergleich**

Tabelle 5.

| Verwendete Blockierungsmittel | | |
|---|---|---|
| | | Molekulargewicht ($MG_x$) |
| ***R6*** | Erucamid | 337 g/mol |
| ***C1*** | Octadecylamin | 269 g/mol |
| ***C2*** | Stearylalkohol | 270g/mol |

Es wurden die NCO-Gruppen des reaktiven Schmelzklebstoff mit einem NCO-Gehalt von $\%NCO_K$ mit Erucamid, Stearylalkohol oder Octadecylamin stöchiometrisch umgesetzt, indem diese Substanzen in einer Menge $m_x$ je zu einer Menge $m_K$ SikaMelt® 9670 (kommerziell erhältlich bei Sika Schweiz AG) ($\%NCO_K$ = 2.1) nach folgender Formel zugegeben wurden:

$$m_x = \frac{MG_x}{42} \times \frac{m_K \times \%NCO_K}{100}$$

Die Zugabe erfolgte bei 130°C. Nach Rühren in einem geschlossenen Gefäss für eine Stunde unter Vakuum bei 130°C wurde die Reaktionsmischung jeweils in Aluminiumtuben zu je 30-40 g abgefüllt, die Viskosität dieser Reaktionsmischung gemessen ($\eta_x$). Die Tuben wurden anschliessend in einem Warmluftofen bei der entsprechenden Temperatur gelagert und nach der jeweiligen Zeit die Viskosität gemessen.

ATR-IR Messung zeigte, dass eine vollständige Reaktion mit den NCO-Gruppen erfolgte.

Tabelle 6.

| Lagerstabilität von blockiertem Schmelzklebstoff | | | |
|---|---|---|---|
| | Viskosität (130°C, 5 $min^{-1}$) | | |
| SikaMelt® 9670 + | ***R6*** | ***C1*** | ***C2*** |
| $\eta_x$ | 30'000 mPa*s | Nicht messbar‡ | 13'000 mPa*s |
| Nach 2 h, 120°C | 30'000 mPa*s | Nicht messbar ‡ | 13'000 mPa*s |
| Nach 16 h, 120°C | 46'000 mPa*s | Nicht messbar ‡ | 9'600 mPa*s |
| Nach 2 h, 160°C | 35'000 mPa*s | Nicht messbar ‡ | 4'000 mPa*s |

‡>250'000 mPa*s

Tabelle 6 zeigt, dass ein Klebstoff, welcher mit dem Amid ***R6*** blockiert wurde, bei 120°C sehr lange stabil ist, und erst nach sehr langer Lagerzeit bei dieser Temperatur einen geringfügigen Viskositätsanstieg aufweist während beim Amin ***C1*** bereits unmittelbar nach dem Mischen ein extrem starker Viskositätsanstieg erfolgt. Beim Alkohol ***C2*** erfolgt jedoch eine starke Viskositätserniedrigung. Eine solche Viskositätserniedrigung ist jedoch unerwünscht, da eine so starke Reduktion der Viskosität für die Reinigung, beziehungsweise für die Verdrängung des blockierten Schmelzklebstoffs durch frischen reaktiven Schmelzklebstoff sehr nachteilig ist.

## Patentansprüche

1. Reinigungsmittelzusammensetzung für reaktive Polyurethanschmelzklebstoffe umfassend mindestens ein Trägermittel **A**, welches keine funktionellen Gruppen trägt, welche mit Isocyanat reaktiv sind; sowie
   mindestens eine Verbindung **B**, welche eine Isocyanat-reaktive funktionelle Gruppe trägt, und ein monofunktionelles Amid der Formel (I) oder der Formel (II) oder ein monofunktionelles Imid der Formel (III) ist,

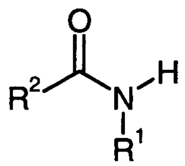

(I)

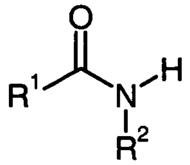

(II)

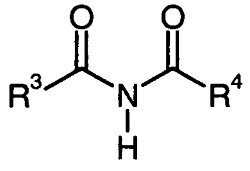

(III)

   wobei $R^1$ für H, einen $C_1$-$C_4$-Alkylrest oder einen Benzylrest steht,
   $R^2$ für einen $C_8$-$C_{22}$ gesättigten oder ungesättigten Alkylrest steht,
   $R^3$ für einen $C_8$-$C_{22}$ gesättigten oder ungesättigten Alkylrest steht,

$R^4$ für einen $C_1$-$C_7$- oder $C_8$-$C_{22}$ gesättigten oder ungesättigten Alkylrest steht.

2. Reinigungsmittelzusammensetzung gemäss Anspruch 1, **dadurch gekennzeichnet, dass** das Trägermittel **A** ein blockiertes Polyurethanprepolymer, ein Kohlenwasserstoffharz, ein blockierter Polyester, ein blockiertes Polyol oder ein Copolymer aus mindestens der Monomere ausgewählt aus der Gruppe umfassend Ethylen, Propylen, Butadien, Vinylester, Vinylchlorid, Styrol sowie Ester der Acryl- oder Methacrylsäure.

3. Reinigungsmittelzusammensetzung gemäss Anspruch 2, **dadurch gekennzeichnet, dass** das Trägermittel **A** ein blockiertes Polyurethan ist.

4. Reinigungsmittelzusammensetzung gemäss Anspruch 2, **dadurch gekennzeichnet, dass** das Trägermittel **A** ein Ethylen-Vinylacetat-Copolymer ist.

5. Reinigungsmittelzusammensetzung gemäss einem der vorhergehenden Ansprüche, **dadurch gekennzeichnet, dass** die Verbindung **B** die Formel (I) aufweist.

6. Reinigungsmittelzusammensetzung gemäss einem der vorhergehenden Ansprüche, **dadurch gekennzeichnet, dass** in Verbindung **B** $R^2$ und $R^3$ ein ungesättigter $C_8$-$C_{20}$-Alkylrest, insbesondere ein $C_nH_{2n-1}$ oder $C_nH_{2n-3}$ oder $C_nH_{2n-5}$ mit n = 8 - 20, bevorzugt ein olefinisch ungesättigter Alkylrest, ist.

7. Reinigungsmittelzusammensetzung gemäss einem der vorhergehenden Ansprüche, **dadurch gekennzeichnet, dass** in Verbindung **B** $R^2$ und $R^3$ ein $C_8$-$C_{22}$-Alkylrest, insbesondere ein $C_{15}$-$C_{22}$-Alkylrest ist.

8. Reinigungsmittelzusammensetzung gemäss einem der vorhergehenden Ansprüche, **dadurch gekennzeichnet, dass** in Verbindung **B** $R^4$ ein $C_1$-$C_7$-Alkylrest, insbesondere Methyl, Ethyl oder Propyl ist.

9. Reinigungsmittelzusammensetzung gemäss einem der Ansprüche 1- 7, **dadurch gekennzeichnet, dass** in Verbindung **B** $R^1$ = H und $R^3$ = $R^4$ ist.

10. Reinigungsmittelzusammensetzung gemäss einem der vorhergehenden Ansprüche, **dadurch gekennzeichnet, dass** die Reinigungsmittelzusammensetzung in etwa die gleiche Viskosität wie die des zu reinigenden reaktiven Polyurethan-Schmelzklebstoffes bei der Reinigungstemperatur aufweist.

11. Reinigungsmittelzusammensetzung gemäss einem der vorhergehenden Ansprüche, **dadurch gekennzeichnet, dass** die Reinigungsmittelzusammensetzung zusätzlich mindestens einen Farbstoff oder ein Farbpigment enthält.

12. Reinigungsmittelzusammensetzung gemäss einem der vorhergehenden Ansprüche, **dadurch gekennzeichnet, dass** die Reinigungsmittelzusammensetzung 10 bis 150 mmol, insbesondere 40 bis 100 mmol, der Verbindung **B** pro 100 g Reinigungsmittelzusammensetzung enthält.

13. Verfahren zur Reinigung einer Herstell- oder Applikationsanlage oder eines Applikationsgerätes von reaktivem Polyurethan-Schmelzklebstoff, **dadurch gekennzeichnet, dass** mit einer Reinigungsmittelzusammensetzung gemäss einem der Ansprüche 1 bis 12 ein reaktiver Polyurethan-Schmelzklebstoff aus einer Applikationsanlage oder einem Applikationsgerät verdrängt wird.

14. Verwendung einer Reinigungsmittelzusammensetzung gemäss einem der Ansprüche 1 bis 12 zur Entfernung von reaktiven Polyurethan-Schmelzklebstoffen aus einer Applikationsanlage oder einem Applikationsgerät, insbesondere aus einer Auftragsapparatur.

Figur 1

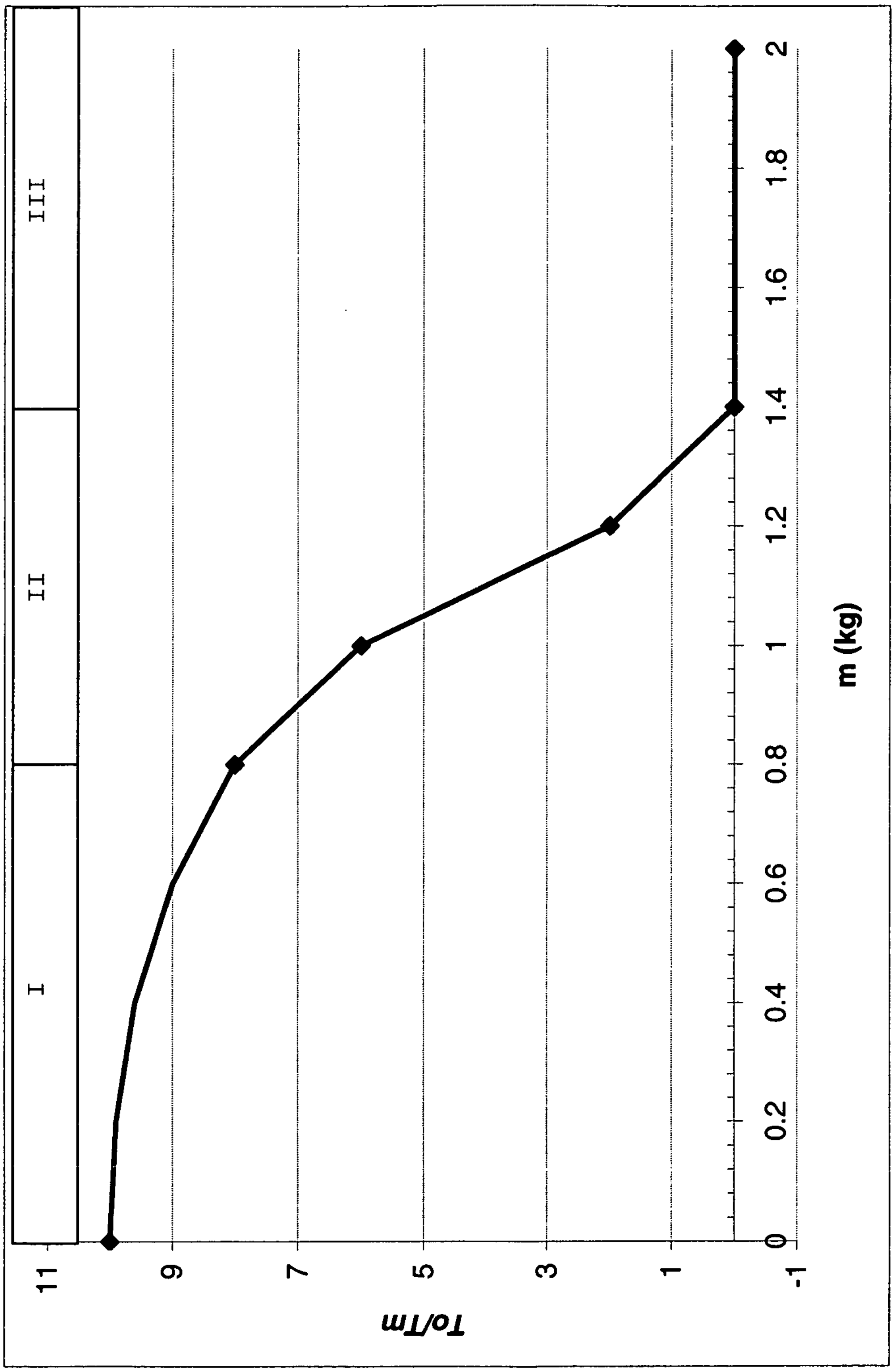

Europäisches Patentamt

# EUROPÄISCHER RECHERCHENBERICHT

Nummer der Anmeldung
EP 03 02 7079

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 139 694 A (KMIEC CHESTER J) 18. August 1992 (1992-08-18) * Spalte 1, Zeile 67 - Spalte 2, Zeile 13 * * Spalte 2, Zeile 59 - Spalte 3, Zeile 3 * * Ansprüche 1-5; Beispiele * | 1-12 | C11D1/52 C11D3/37 C09D9/04 |
| D,A | US 5 772 790 A (HUBER LEE M) 30. Juni 1998 (1998-06-30) * Spalte 2, Zeile 1-60 * * Ansprüche 1,16; Beispiele * | 1-14 | |
| D,A | EP 0 544 058 A (H B FULLER LICENSING & FINANCING) 2. Juni 1993 (1993-06-02) * Spalte 2, Zeile 13-20 * * Ansprüche 1,2; Beispiele * | 1-14 | |
| A | DE 200 20 588 U (HENKEL DORUS GMBH & CO KG) 7. Juni 2001 (2001-06-07) * Seite 5, Absatz 2 - Seite 6, Absatz 3 * * Seite 11, Absätze 3,4 * * Seite 20, Absätze 2,3 * * Beispiele * | 1-14 | |

RECHERCHIERTE SACHGEBIETE (Int.Cl.7)
C11D
C09D

Der vorliegende Recherchenbericht wurde für alle Patentansprüche erstellt

2

| Recherchenort | Abschlußdatum der Recherche | Prüfer |
|---|---|---|
| DEN HAAG | 16. April 2004 | Bertran Nadal, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 03 02 7079

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-04-2004

| Im Recherchenbericht angeführtes Patentdokument | | Datum der Veröffentlichung | Mitglied(er) der Patentfamilie | Datum der Veröffentlichung |
|---|---|---|---|---|
| US 5139694 | A | 18-08-1992 | KEINE | |
| US 5772790 | A | 30-06-1998 | KEINE | |
| EP 0544058 | A | 02-06-1993 | DE 9114780 U1 | 13-02-1992 |
| | | | AT 165392 T | 15-05-1998 |
| | | | DE 59209298 D1 | 28-05-1998 |
| | | | DK 544058 T3 | 04-01-1999 |
| | | | EP 0544058 A2 | 02-06-1993 |
| | | | ES 2117020 T3 | 01-08-1998 |
| | | | US 5415799 A | 16-05-1995 |
| | | | US 5348680 A | 20-09-1994 |
| DE 20020588 | U | 03-05-2001 | DE 20020588 U1 | 03-05-2001 |
| | | | DE 10153791 A1 | 25-07-2002 |
| | | | WO 0238719 A1 | 16-05-2002 |

EPO FORM P0461

Für nähere Einzelheiten zu diesem Anhang : siehe Amtsblatt des Europäischen Patentamts, Nr.12/82